(19) Europäisches Patentamt
European Patent Office
Office européen des brevets

(11) **EP 4 542 744 A1**

(12) **EUROPEAN PATENT APPLICATION**
published in accordance with Art. 153(4) EPC

(43) Date of publication:
**23.04.2025 Bulletin 2025/17**

(21) Application number: **22951545.7**

(22) Date of filing: **21.07.2022**

(51) International Patent Classification (IPC):
***H01M 50/24*** (2021.01)

(52) Cooperative Patent Classification (CPC):
**H01M 50/204; H01M 10/0525; H01M 10/613;
H01M 10/625; H01M 10/647; H01M 10/653;
H01M 10/6554; H01M 10/6556; H01M 10/6567;
H01M 50/209; H01M 50/24; H01M 50/30;
H01M 50/3425; H01M 50/35; H01M 50/383;**
(Cont.)

(86) International application number:
**PCT/CN2022/107089**

(87) International publication number:
**WO 2024/016269 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **CONTEMPORARY AMPEREX
TECHNOLOGY
(HONG KONG) LIMITED
Hong Kong (HK)**

(72) Inventors:
• **LI, Yao
Ningde, Fujian 352100 (CN)**
• **CHEN, Xiaobo
Ningde, Fujian 352100 (CN)**

(74) Representative: **Gong, Jinping
CocreateIP
Neumarkterstr. 21
81673 München (DE)**

(54) **BATTERY AND ELECTRICAL DEVICE**

(57) Embodiments of the present application provide a battery and an electrical apparatus. The battery includes a battery cell and a guard member. The battery cell includes a pressure relief mechanism. The guard member includes a protective region opposite to the pressure relief mechanism in a thickness direction of the pressure relief mechanism, and the protective region is used for blocking at least part of substances released by the battery cell through the pressure relief mechanism. The weight energy density of the battery cell is E; in the thickness direction, a minimum distance between the pressure relief mechanism and the protective region is L, and E and L meet: 2 Wh/(kg • mm)≤E/L≤7010 Wh/(kg • mm). The embodiments of the present application are capable of reducing the redundancy in design of the distance between the guard member and the pressure relief mechanism, reducing the loss of energy density of the battery, and improving the safety performance of the battery while taking into account the safety protection requirements of the battery.

**FIG. 2**

(52) Cooperative Patent Classification (CPC): (Cont.)
H01M 2200/20; H01M 2220/20; Y02E 60/10

## Description

### Technical Field

The present application relates to the technical field of batteries, and more particularly, to a battery and an electrical apparatus.

### Background

With the continuous advancement of the battery technology, various new energy industries using batteries as energy storage devices have developed rapidly. In the development of the battery technology, in addition to improvement of the performance of batteries, the safety problem is also a non-negligible issue. If the safety of a battery cannot be guaranteed, the battery cannot be used. Therefore, how to enhance the safety performance of the battery is a technical problem urgently to be solved in the battery technologies.

### Summary of the Invention

The present application provides a battery and an electrical apparatus, which can improve the safety performance.

In a first aspect, the embodiments of the present application provide a battery, which includes a battery cell and a guard member. The battery cell includes a pressure relief mechanism. The guard member includes a protective region opposite to the pressure relief mechanism in a thickness direction of the pressure relief mechanism, and the protective region is used for blocking at least part of substances released by the battery cell through the pressure relief mechanism. The weight energy density of the battery cell is E; in the thickness direction, a minimum distance between the pressure relief mechanism and the protective region is L. E and L meet: 2 Wh/(kg • mm)≤E/L≤7010 Wh/(kg • mm).

In general, when a battery cell experiences thermal runaway, the higher the value of E, the more violent a chain reaction occurs inside the battery cell, and the higher the temperature and speed of the substance released by the battery cell. Therefore, the higher the value of E, the higher the requirement for the minimum distance L between the pressure relief mechanism and the protective region. If E is too large and L is too small, particles in the high-temperature and high-speed substance may easily accumulate on a thermally runaway battery cell and spread to a normal battery cell, and may also be more likely to rebound to the normal battery cell. This may both cause the risk of the normal battery cell being burned and damaged, and may also increase the temperature of the normal battery cell, thereby causing the risk of thermal runaway of the normal battery cell, and leading to safety hazards. If E is too small and L is too large, the distance between the pressure relief mechanism and the protective region may be over-designed, which may reduce the utilization of the internal space of the battery and cause a waste of the energy density of the battery. The above technical solution limits the value of E/L to be between 2 Wh/(kg • mm) and 7010 Wh/(kg • mm), so as to reduce the redundancy in design of the distance between the guard member and the pressure relief mechanism, reduce the loss of energy density of the battery, and improve the safety performance of the battery while taking into account the safety protection requirements of the battery.

In some embodiments, E and L meet: 10 Wh/(kg • mm)≤E/L≤800 Wh/(kg • mm).

In some embodiments, the value of E is between 100 Wh/kg and 3505 Wh/kg. The weight energy density of the battery cell is greater than or equal to 100 Wh/kg, which can effectively increase the energy density of the battery and improve the range of an electrical apparatus using the battery. The weight energy density of the battery cell is less than or equal to 3505 Wh/kg, which can keep the thermally runaway battery cell under control and reduce safety risks.

In some embodiments, the value of E is between 100 Wh/kg and 400 Wh/kg.

In some embodiments, the value of L is between 0.5 mm and 50 mm.

The value of L is limited to be between 0.5 mm and 50 mm in the above technical solution, so as to reduce the redundancy in design of the distance between the guard member and the pressure relief mechanism, reduce the loss of energy density of the battery, and improve the safety performance of the battery while taking into account the safety protection requirements of the battery.

In some embodiments, the value of L is between 0.5 mm and 10 mm.

In some embodiments, a flow channel for a heat exchange medium to flow is arranged inside the guard member. The guard member can achieve both a protective function and a thermal management function, which helps simplify the structure of the battery and improve the energy density of the battery.

In some embodiments, the guard member further includes a heat exchange region, the battery cell further includes a first wall, and the pressure relief mechanism is arranged on the first wall. The heat exchange region is used for connecting the first wall to exchange heat with the first wall. The heat exchange region exchanges heat with the first wall to adjust the temperature of the battery cell, so that the battery cell works within a suitable temperature range, thereby improving the cycle performance of the battery cells.

In some embodiments, the battery further includes a thermally conductive structure, at least a portion of the thermally conductive structure being located between the first wall and the heat exchange region and connecting the first wall and the heat exchange region. The thermally conductive structure may connect the first wall and the heat exchange region to enable stable heat exchange between the first wall and the heat exchange region. The thermally conductive structure may also support the guard member such that the guard member is spaced apart from the pressure relief mechanism.

In some embodiments, the battery cell further includes the first wall, and the pressure relief mechanism is arranged on the first wall. The guard member includes a main body part and a supporting portion. The main body part is arranged at an interval from the first wall in the thickness direction. The supporting portion is located between the first wall and the main body part and is used for connecting the first wall and the main body part. The main body part includes the protective region.

In the above technical solution, the supporting portion is not only capable of fixing the main body part to the battery cell, but also capable of separating the protective region from the pressure relief mechanism. By adjusting the size of the supporting portion, the minimum distance between the pressure relief mechanism and the protective region can be adjusted.

In some embodiments, the guard member is a flat plate structure. The flat plate structure is easy to form and easy to mount.

In some embodiments, there are a plurality of battery cells, and the guard member is located on the same side of pressure relief mechanisms of the plurality of battery cells. The guard member includes a plurality of protective regions, and the plurality of protective regions are in one-to-one correspondence with the pressure relief mechanisms of the plurality of battery cells.

In the above technical solution, the guard member is capable of covering the pressure relief mechanisms of the plurality of battery cells. No matter which battery cell experiences thermal runaway, the guard member is capable of blocking the high-temperature and high-speed substance and reducing safety risks.

In some embodiments, the battery further includes a box body, and the battery cell and the guard member are accommodated in the box body. The guard member is fixed on a surface of the box body facing the pressure relief mechanism.

In the above technical solution, the guard member can block the substance released by the battery cell to reduce the thermal shock to the box body, so as to reduce the heat transferred to the box body, reduce the risk of the box body being melted through, and improve the safety of the battery. The box body can fix the guard member to reduce the risk of the guard member displacing under the impact of the high-temperature and high-speed substance, reduce the probability of impact damage to the guard member, and reduce the risk of protective failure of the guard member.

In some embodiments, the battery cell includes a first wall, a second wall, and a third wall, the pressure relief mechanism is provided on the first wall, the second wall is located on a side of the first wall away from the guard member, and the third wall connects the first wall and the second wall. The battery cell further includes an electrode terminal, and the electrode terminal is arranged on at least one of the first wall, the second wall, and the third wall.

In some embodiments, the material of the guard member includes at least one of inorganic salt, inorganic ceramic, elemental metal, elemental carbon, and organic colloid.

In a second aspect, the embodiments of the present application provide an electrical apparatus, including the battery in any embodiment of the first aspect, the battery being used for providing electric energy.


**Description of Drawings**

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to the drawings without any creative efforts.

Fig. 1 is a schematic structural diagram of a vehicle according to some embodiments of the present application;
Fig. 2 is a schematic exploded diagram of a battery according to some embodiments of the present application;
Fig. 3 is a schematic structural diagram of a battery according to some embodiments of the present application;
Fig. 4 is another schematic structural diagram of the battery shown in Fig. 3, in which a pressure relief mechanism of a battery cell of the battery is in an actuated state;
Fig. 5 is a schematic enlarged diagram of the battery shown in Fig. 3 at a circular frame A;
Fig. 6 is a schematic structural diagram of a battery cell of a battery according to some embodiments of the present application;
Fig. 7 is a schematic structural diagram of a battery according to some embodiments of the present application;
Fig. 8 is a schematic structural diagram of a battery according to some other embodiments of the present application;

Fig. 9 is a schematic structural diagram of a battery according to some other embodiments of the present application;

Fig. 10 is a schematic structural diagram of a battery according to some other embodiments of the present application; and

Fig. 11 is a schematic diagram of a battery in a testing process according to some embodiments of the present application.

In the drawings, the drawings are not drawn to actual scale.

## Detailed Description

For the objects, technical solutions, and advantages of the embodiments of the present application to be clearer, the technical solutions in the embodiments of the present application may be clearly and completely described below with reference to the drawings in the embodiments of the present application, and it is apparent that the described embodiments are a part of the embodiments of the present application rather than all the embodiments. Based on the embodiments of the present application, all other embodiments derived by a person of ordinary skill in the art without any creative effort shall all fall within the protection scope of the present application.

Unless otherwise defined, all technical and scientific terms used in the present application have the same meaning as commonly understood by those skilled in the art to which the present application belongs. The terms used in the specification of present application are for the purpose of describing specific embodiments only, and are not intended to limit the present application. The terms "include/comprise" and "have" and any variations thereof in the specification and claims of the present application as well as in the above description of drawings are intended to cover a non-exclusive inclusion. The terms "first," "second," and the like in the specification and claims of the present application or in the accompany drawings above are used to distinguish different objects, not to describe a particular sequence or primary-secondary relationship.

Reference to "an embodiment" in the present application means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should also be noted that, unless otherwise expressly specified and defined, the terms "install," "connected," "connect," and "attach" should be understood in a broad sense, for example, they may be fixedly connected, detachably connected, or integrally connected; and they may be directly connected or indirectly connected through an intermediate medium, or an internal communication of two elements. For those of ordinary skill in the art, the specific meanings of the above terms in the present application can be understood according to specific situations.

In the description of the embodiments of the present application, the term "and/or" is only an association relationship for describing associated objects, indicating that there may be three relationships, for example, A and/or B may represent three situations: A exists alone, both A and B exist, and B exists alone. In addition, the character "/" in the present application generally means that the associated objects before and after it are in an "or" relationship.

In the embodiments of the present application, the same reference numerals indicate the same components and, for the sake of brevity, the detailed description of the same components is omitted in different embodiments. It should be understood that the dimensions such as the thickness, length, and width of various components in the embodiments of the present application shown in the drawings, as well as the dimensions such as the overall thickness, length, and width of the integrated apparatus are illustrative only and shall not constitute any limitation on the present application.

"A plurality of" appearing in the present application means two or more (including two).

In the present application, the term "parallel" includes not only absolute parallel situations, but also generally parallel situations of conventional cognition in engineering; at the same time, the term "vertical" includes not only absolute vertical situations, but also generally vertical situations of conventional cognition in engineering.

In the present application, the battery cell may include a lithium-ion battery cell, a lithium-sulfur battery cell, a sodium-lithium-ion battery cell, a sodium-ion battery cell, a magnesium-ion battery cell, or the like, which is not limited in embodiments of the present application. The battery cell may be cylindrical, flat, rectangular, or in other shapes, which is also not limited in embodiments of the present application. The battery cells may be hard-shell battery cells, pouch cells, or other types of battery cells.

The battery cell includes an electrode assembly and an electrolyte solution. For example, the electrode assembly includes a positive electrode plate, a negative electrode plate, and a spacer. The battery cell operates mainly relying on movement of metal ions between the positive electrode plate and the negative electrode plate. The positive electrode plate includes a positive electrode current collector and a positive electrode active material layer, and the positive electrode active material layer is coated on a surface of the positive electrode current collector; the positive electrode current collector includes a positive electrode current collecting portion and a positive tab, the positive electrode current collecting portion is coated with the positive electrode active material layer, and the positive tab is not coated with the positive electrode active material layer. Taking a lithium-ion battery cell as an example, the material of the positive electrode current collector may be aluminum, and the positive electrode active material layer includes a positive electrode active material, and the positive electrode active material may be lithium cobalt oxide, lithium iron phosphate, ternary lithium, lithium manganate, or the like. The negative electrode plate includes a negative electrode current collector and a negative electrode active material layer, and the negative electrode active material layer is coated on a surface of the negative electrode current collector; the negative electrode current collector includes a negative electrode current collecting portion and a negative tab, the negative electrode current collecting portion is coated with the negative electrode active material layer, and the negative tab is not coated with the negative electrode active material layer. The material of the negative electrode current collector may be copper, and the negative electrode active material layer includes a negative electrode active material, and the negative electrode active material may be carbon, silicon, or the like. The material of the spacer may be polypropylene (PP), polyethylene (PE), or the like.

The battery mentioned in the embodiments of the present application refers to a single physical module including one or a plurality of battery cells to provide a higher voltage and capacity. The battery generally includes a box body for encapsulating one or a plurality of battery cells. The box body can prevent liquids or other foreign matters from affecting charging or discharging of the battery cells.

Many design factors, such as the energy density, cycle life, discharge capacity, charge-discharge rate, and other performance parameters, should be considered in the development of the battery technologies. In addition, the safety of the battery also needs to be taken into account.

A pressure relief mechanism on the battery cell has an important impact on the safety performance of the battery cell. For example, when short circuit, overcharge, and the like occur, thermal runaway may occur inside the battery cell and the pressure may rise suddenly. In this case, the internal pressure and temperature can be relieved outward through the actuation of the pressure relief mechanism, so as to prevent explosion and fire of the battery cell.

The pressure relief mechanism may be an element or a component that is activated when the battery cell reaches a certain condition. For example, the pressure relief mechanism may be an element or a component that is actuated to relieve the internal pressure and/or internal substance of a battery cell when the internal pressure or internal temperature reaches a predetermined threshold. The threshold design varies depending on the design requirements. The threshold may depend on the material of one or a plurality of the positive electrode plate, the negative electrode plate, the electrolyte solution, and the spacer in the battery cell.

The pressure relief mechanism may take the form of an explosion-proof valve, a gas valve, a pressure relief valve, a safety valve, or the like, and may specifically adopt a pressure-sensitive element or structure. That is, when the internal pressure of the battery cell reaches a predetermined threshold, the pressure relief mechanism performs an action or a weak region arranged in the pressure relief mechanism is broken, so as to form a pressure relief channel for relieving the internal pressure. Alternatively, the pressure relief mechanism may utilize a temperature-sensitive element or structure, that is, when the internal temperature of the battery cell reaches a predetermined threshold, the pressure relief mechanism performs an action, so as to form a pressure relief channel for relieving the internal pressure. Alternatively, the pressure relief mechanism may also be a component capable of actuating actively. For example, the pressure relief mechanism may be actuated upon receiving a control signal from the battery.

The pressure relief mechanism may also take other forms. For example, the pressure relief mechanism may be a lower-strength structure on a shell of the battery cell. When the battery cell is thermally runaway, the lower-strength structure cracks or deforms to form a pressure relief channel for relieving the internal pressure. For example, the pressure relief mechanism may be a welding mark on the shell of the battery cell.

The "actuate" mentioned in the present application means that the pressure relief mechanism performs an action or is activated to a certain state, so that the internal pressure and/or internal substance of the battery cell can be relieved. The action performed by the pressure relief mechanism may include, but is not limited to: at least part of the pressure relief mechanism being broken, crushed, torn, opened, or the like. When the pressure relief mechanism is actuated, the high-temperature and high-pressure substance inside the battery cell are discharged as emissions outwardly from the actuated part. In this way, the pressure of the battery cell is capable of being relieved under controllable pressure, so as to prevent more serious potential accidents.

The emissions from the battery cell mentioned in the present application include, but are not limited to, the electrolyte solution, dissolved or split positive and negative electrode plates, fragments of the spacer, high-temperature and high-speed gas generated by reaction, flames, and the like.

When the battery cell is thermally runaway, the battery cell releases emissions into the box body. The box body is also provided with a pressure relief mechanism, and the pressure relief mechanism of the box body is actuated to discharge the emissions outside the box body at a set position of the box body.

The inventor noticed that the emissions released by the battery cell are in a high-temperature and high-speed state. Under the impact of the emissions, the battery may be broken, causing a fire outside the battery and causing safety hazards.

After discovering the above problems, the inventor tried to arrange a guard member at a position opposite to the pressure relief mechanism of the battery cell. The guard member can block the high-temperature and high-speed substance released by the battery cell and withstand the impact of the high-temperature and high-speed substance, thereby reducing the risk of the battery being broken through and improving the safety performance.

The inventor found through research that particles in the high-temperature and high-speed substance may rebound or sputter to the surroundings after being blocked by the guard member. If the distance between the pressure relief mechanism and the guard member is too small, the particles may accumulate on the battery cell and spread to other components (for example, a normal battery cell adjacent to the thermally runaway battery cell), or they may rebound to other components, thereby increasing the risk of damage to these components and causing safety hazards. In order to reduce potential safety hazards, the inventor tried to increase the distance between the pressure relief mechanism and the guard member. However, increasing the distance may reduce the utilization of the internal space of the battery and reduce the energy density of the battery. If the distance between the pressure relief mechanism and the guard member is excessively designed, a waste of the energy density may be caused. After further research, the inventor found that when the battery cell is thermally runaway, the weight energy density of the battery cell is related to the temperature and rate of the substance released by the battery cell; the higher the weight energy density of the battery cell is, the easier it is for particles in the high-temperature and high-speed substance to accumulate, and the easier it is to damage other components adjacent to the thermally runaway battery cell.

In view of this, the inventor provides a technical solution that sets the distance between the pressure relief mechanism and the guard member according to the weight energy density of the battery cell, so as to reduce safety risks and reduce the waste of the energy density of the battery.

The technical solution described in the embodiments of the present application are applicable to electrical apparatuses using batteries.

The electrical apparatus may be a vehicle, a mobile phone, a portable device, a laptop computer, a ship, a spacecraft, an electric toy, an electric tool, and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. The electrical apparatus is not specially limited in the embodiments of the present application.

In the following embodiments, for the convenience of description, the electrical apparatus being a vehicle is taken as an example for illustration.

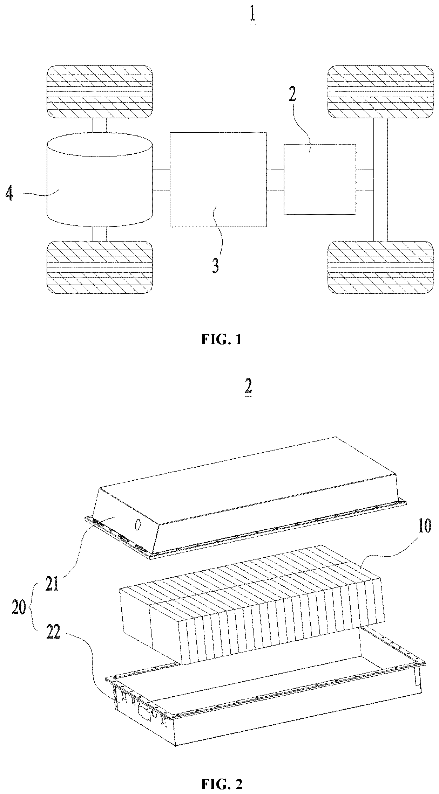

Fig. 1 is a schematic structural diagram of a vehicle according to some embodiments of the present application.

As shown in Fig. 1, the interior of the vehicle 1 is provided with a battery 2, and the battery 2 may be arranged at the bottom or head or tail of the vehicle 1. The battery 2 may be used to power the vehicle 1. For example, the battery 2 may be used as an operating power source of the vehicle 1.

The vehicle 1 may further include a controller 3 and a motor 4. The controller 3 is used to control the battery 2 to power the motor 4, for example, for meeting operating power requirements when the vehicle 1 is starting, navigating, and driving.

In some embodiments of the present application, the battery 2 can not only be used as the operating power source of the vehicle 1, but also be used as a driving power source of the vehicle 1 to replace or partially replace fuel or natural gas to provide driving power for the vehicle 1.

Fig. 2 is a schematic exploded diagram of a battery according to some embodiments of the present application.

As shown in Fig. 2, the battery 2 includes a box body 20 and a battery cell 10, and the battery cell 10 is accommodated within the box body 20.

The box body 20 is used to accommodate the battery cell 10, and the box body 20 may be of various structures. In some embodiments, the box body 20 may include a first box body part 21 and a second box body part 22. The first box body part 21 and the second box body part 22 are covered by each other, and the first box body part 21 and the second box body part 22 together define an accommodating space for accommodating the battery cell 10.

In some embodiments, the first box body part 21 may be a hollow structure with one side open, the second box body part 22 may be a plate-like structure, and the first box body part 21 covers the opening side of the second box body part 22 to form the box body 20 with the accommodating space. In some other embodiments, the first box body part 21 and the second box body part 22 may both be hollow structures with one side open, and the opening side of the first box body part 21 covers the opening side of the second box body part 22 to form the box body 20 with the accommodating space.

The first box body part 21 and the second box body part 22 may be of a variety of shapes, such as a cylinder and a rectangular parallelepiped.

In order to improve the sealing performance after the first box body part 21 and the second box body part 22 are connected, a sealing member, such as a sealant and a seal ring, may also be arranged between the first box body part 21 and the second box body part 22.

Assuming that the first box body part 21 is covered on the top of the second box body part 22, the first box body part 21 may also be referred to as an upper box cover, and the second box body part 22 may also be referred to as a lower box body 20.

There may be one or a plurality of battery cells 10 in the battery 2. If there are a plurality of battery cells 10, the plurality of battery cells 10 may be in series connection, parallel connection, or parallel-series connection, wherein the parallel-series connection means that the plurality of battery cells 10 are in both series connection and parallel connection. The plurality of battery cells 10 may be directly in series connection, parallel connection, or parallel-series connection, and then the whole composed of the plurality of battery cells 10 may be accommodated in the box body 20. Of course, the plurality of battery cells 10 may also be in series connection, parallel connection, or parallel-series connection first to form battery modules, and the plurality of battery modules may be in series connection, parallel connection, or parallel-series connection to form a whole, and be accommodated in the box body 20.

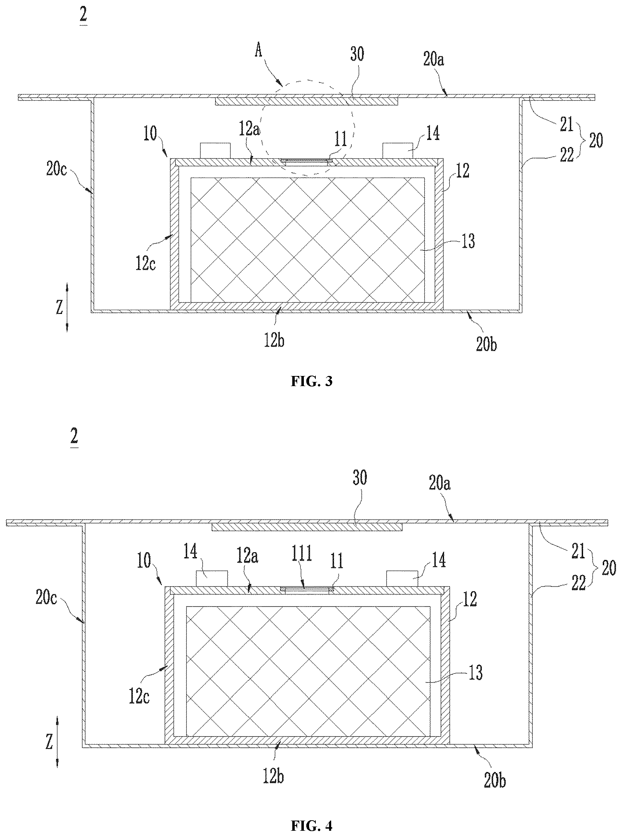

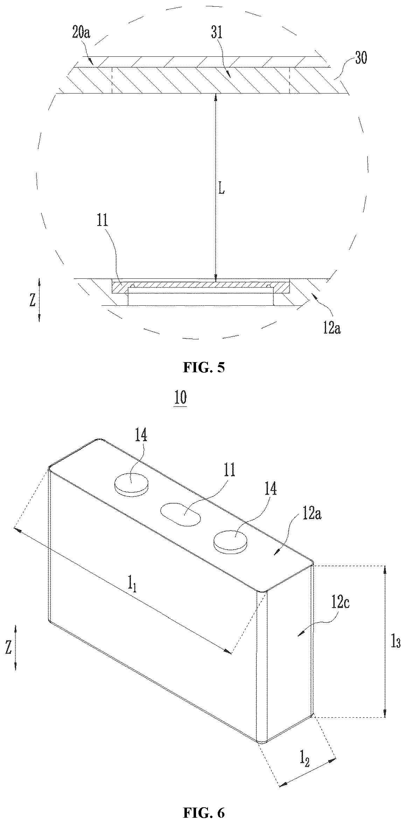

Fig. 3 is a schematic structural diagram of a battery according to some embodiments of the present application; Fig. 4 is another schematic structural diagram of the battery shown in Fig. 3, in which a pressure relief mechanism of a battery cell of the battery is in an actuated state; Fig. 5 is a schematic enlarged diagram of the battery shown in Fig. 3 at a circular frame A; and Fig. 6 is a schematic structural diagram of a battery cell of a battery according to some embodiments of the present application.

Referring to Fig. 3 to Fig. 6, the battery 2 according to the embodiment of the present application includes a battery cell 10 and a guard member 30. The battery cell 10 includes a pressure relief mechanism 11. The guard member 30 includes a protective region 31 opposite to the pressure relief mechanism 11 in a thickness direction Z of the pressure relief mechanism 11, and the protective region 31 is used for blocking at least part of substances released by the battery cell 10 through the pressure relief mechanism 11. The weight energy density of the battery cell 10 is E; in the thickness direction Z, the minimum distance between the pressure relief mechanism 11 and the protective region 31 is L. E and L meet: $2\,\text{Wh}/(\text{kg} \cdot \text{mm}) \leq E/L \leq 7010\,\text{Wh}/(\text{kg} \cdot \text{mm})$.

There may be one or a plurality of battery cells 10. For example, there are a plurality of battery cells 10. Optionally, the pressure relief mechanisms 11 of the plurality of battery cells 10 all face the guard member 30.

When the battery cell 10 is in a normal state, the pressure relief mechanism 11 does not form a pressure relief channel. The pressure relief mechanism 11 seals the electrode assembly 13 and the electrolyte solution of the battery cell 10 inside the battery cell 10 to reduce the risk of electrolyte solution leakage. When thermal runaway occurs inside the battery cell 10, the pressure relief mechanism 11 is actuated to form a pressure relief channel 111. The substance inside the battery cell 10 may be released to the outside of the battery cell 10 via the pressure relief channel 111.

The guard member 30 is a component of the battery 2 that withstands the thermal shock of the high-temperature and high-speed substance discharged from the battery cell 10. When subjected to the thermal shock by the high-temperature and high-speed substance released from the battery cell 10, the guard member 30 may not be melted through or broken, thereby playing a protective role.

The guard member 30 may be a functional component in the battery 2, which may only have a thermal protection function, or may also achieve other functions while achieving a thermal protection function. In some examples, the guard member 30 may be a thermal management component in the battery 2, which may not only regulate the temperature of the battery cell 10, but also block the high-temperature and high-speed substance released from the battery cell 10. In other examples, the guard member 30 may also be part of an outer envelope of the battery 2. In yet other examples, the guard member 30 is a separate member connected to an outer envelope of the battery cell 10 or the battery 2.

The protective region 31 is a portion of the guard member 30 that overlaps the pressure relief mechanism 11 in the thickness direction Z. For example, the projection of the protective region 31 in the thickness direction Z completely overlaps the projection of the pressure relief mechanism 11 in the thickness direction Z.

The guard member 30 may only include the protective region 31, that is, the entire guard member 30 and the pressure relief mechanism 11 overlap in the thickness direction Z; alternatively, in addition to the protective region 31, the guard member 30 may also include an area not overlapping the pressure relief mechanism 11 in the thickness direction Z.

There may be one or a plurality of protective regions 31 of the guard member 30. For example, the plurality of protective regions 31 of the guard member 30 may be respectively opposite to the pressure relief mechanisms 11 of the plurality of battery cells 10.

Other components may or may not exist between the protective region 31 and the pressure relief mechanism 11. For example, there may be certain components between the protective region 31 and the pressure relief mechanism 11, for example, an insulation patch of the battery cell 10 for protecting the pressure relief mechanism 11, a wire harness isolation plate of the battery 2, or other components. The thermal shock resistance of the guard member 30 is better than the thermal shock resistance of the component located between the protective region 31 and the pressure relief mechanism 11. The component located between the protective region 31 and the pressure relief mechanism 11 may be broken through by the high-temperature and high-speed substance released by the battery cell 10.

The guard member 30 may be a plate structure, a frame structure, or other structures. For example, the guard member 30 may be a flat plate with uniform thickness or a plate with uneven thickness.

The guard member 30 may be an integral structure or a structure assembled from a plurality of sub-components.

The guard member 30 may be fixed to the battery cell 10, the box body of the battery 2, or another component of the battery 2, which is not limited in the embodiment of the present application.

The unit of the weight energy density E of the battery cell 10 is Wh/kg (Watt-hour per kilogram). E=C/G, wherein C is the capacity of the battery cell 10, and G is the weight of the battery cell 10.

In general, when a battery cell 10 experiences thermal runaway, the higher the value of E, the more violent a chain reaction occurs inside the battery cell 10, and the higher the temperature and speed of the substance released by the battery cell 10. Therefore, the higher the value of E, the higher the requirement for the minimum distance L between the pressure relief mechanism 11 and the protective region 31. If E is too large and L is too small, particles in the high-temperature and high-speed substance may easily accumulate on a thermally runaway battery cell 10 and spread to a normal battery cell 10, and may also be more likely to rebound to the normal battery cell 10. This may both cause the risk of the normal battery cell 10 being burned and damaged, and may also increase the temperature of the normal battery cell 10, thereby causing the risk of thermal runaway of the normal battery cell 10, and leading to safety hazards. If E is too small and L is too large, the distance between the pressure relief mechanism 11 and the protective region 31 may be over-designed, which may reduce the utilization of the internal space of the battery 2 and cause a waste of the energy density of the battery 2.

After research, the inventor limited the value of E/L to be between 2 Wh/(kg·mm) and 7010 Wh/(kg·mm), so as to reduce the redundancy in design of the distance between the protective region 31 and the pressure relief mechanism 11, reduce the loss of energy density of the battery 2, and improve the safety performance of the battery 2 while taking into account the safety protection requirements of the battery 2.

In some embodiments, the value of E/L is 2 Wh/(kg·mm), 10 Wh/(kg·mm), 50 Wh/(kg·mm), 100 Wh/(kg·mm), 500 Wh/(kg·mm), 800 Wh/(kg·mm), 1000 Wh/(kg·mm), 3000 Wh/(kg·mm), 5000 Wh/(kg·mm), 7000 Wh/(kg·mm), or 7010 Wh/(kg·mm).

In some embodiments, E and L meet: 10 Wh/(kg·mm)≤E/L≤800 Wh/(kg·mm).

In some embodiments, the value of E is between 100 Wh/kg and 3505 Wh/kg.

The weight energy density of the battery cell 10 is greater than or equal to 100 Wh/kg, which can effectively increase the energy density of the battery 2 and improve the range of an electrical apparatus using the battery 2. The weight energy density of the battery cell 10 is less than or equal to 3505 Wh/kg, which can keep the thermally runaway battery cell 10 under control and reduce safety risks.

For example, the value of E is 100 Wh/kg, 200 Wh/kg, 300 Wh/kg, 400 Wh/kg, 600 Wh/kg, 1000 Wh/kg, 2000 Wh/kg, 3000 Wh/kg, or 3505 Wh /kg.

In some embodiments, the value of E is between 100 Wh/kg and 400 Wh/kg.

In some embodiments, the value of L is between 0.5 mm and 50 mm.

If L is too small, particles in the high-temperature and high-speed substance may easily accumulate on a thermally runaway battery cell 10 and spread to a normal battery cell 10, and may also be more likely to rebound to the normal battery cell 10. This may both cause the risk of the normal battery cell 10 being burned and damaged, and may also increase the temperature of the normal battery cell 10, thereby causing the risk of thermal runaway of the normal battery cell 10, and leading to safety hazards. If L is too large, the distance between the pressure relief mechanism 11 and the protective region 31 may be over-designed, which may reduce the utilization of the internal space of the battery 2 and cause a waste of the energy density of the battery 2.

In the embodiment of the present application, the value of L is limited to be between 0.5 mm and 50 mm, so as to reduce the redundancy in design of the distance between the protective region 31 and the pressure relief mechanism 11, reduce the loss of energy density of the battery 2, and improve the safety performance of the battery 2 while taking into account the safety protection requirements of the battery 2.

In the embodiment of the present application, the value of L is greater than or equal to 0.5 mm, so that the space between the guard member 30 and the pressure relief mechanism 11 is capable of exhausting smoothly, thereby reducing the risk of untimely exhaust due to insufficient exhaust space, improving the safety performance, and reducing the possibility of explosion of the battery 2.

For example, the value of L is 0.5 mm, 1 mm, 5 mm, 10 mm, 20 mm, 30 mm, or 50 mm.

In some embodiments, the value of L is between 0.5 mm and 10 mm.

In some embodiments, when the battery cell 10 is thermally runaway, the pressure relief mechanism 11 needs to perform certain actions (for example, a part of the pressure relief mechanism 11 is broken or folded) to form a relief channel 111. Optionally, the value of L is greater than or equal to 0.5 mm to provide space for the action of the pressure relief mechanism 11 and reduce the risk of the guard member 30 interfering with the action of the pressure relief mechanism 11, thereby allowing the battery cell 10 to release pressure in a timely manner.

In some embodiments, when the battery cell 10 is thermally runaway, the pressure relief mechanism 11 is actuated and forms a pressure relief channel 111. Optionally, an axial direction of the pressure relief channel 111 is parallel to the thickness direction Z of the pressure relief mechanism 11.

In some embodiments, the battery 2 further includes a box body 20, and the battery cell 10 and the guard member 30 are accommodated in the box body 20.

The box body 20 may be an outer envelope of the battery 2, and the battery cells 10 are located inside the outer envelope. The box body 20 can prevent liquids or other foreign matters from affecting charging or discharging of the battery cells 10.

The pressure relief mechanism 11 of the battery cell 10 may face a bottom wall 20b of the box body 20, a top wall 20a of the box body 20, or a side wall 20c of the box body 20.

In some embodiments, the guard member 30 is fixed on a surface of the box body 20 facing the pressure relief mechanism 11. The box body 20 can fix the guard member 30 to reduce the risk of the guard member 30 displacing under the impact of the high-temperature and high-speed substance, reduce the probability of impact damage to the guard member 30, and reduce the risk of protective failure of the guard member 30. The guard member 30 can block the substance released by the battery cell 10 to reduce the thermal shock to the box body 20, so as to reduce the heat transferred to the box body 20, reduce the risk of the box body 20 being melted through, and improve the safety of the battery 2.

In some embodiments, the guard member 30 is fixed to the box body 20 by bonding, welding, fastener connection, or snapping. Of course, the guard member 30 may also be fixed to the box body 20 in other ways.

In some embodiments, the thermal shock resistance of the guard member 30 is better than the thermal shock resistance of the box body 20. The thermal shock resistance refers to the ability of a material to withstand rapid changes in temperature without being damaged. In other words, when impacted by the same high-temperature and high-speed substance, the guard member 30 is less likely to be damaged than the box body 20.

In some embodiments, the guard member 30 may function for thermal insulation to reduce heat transfer to the box body 20. When the battery cell 10 is thermally runaway, due to the presence of the guard member 30, less heat is conducted to the box body 20. Therefore, the embodiment of the present application can reduce the material requirements for the box body 20. For example, the box body 20 may be made of some materials that are not high-temperature resistant, such as polyester materials. Of course, the box body 20 may also be made of some relatively high-temperature resistant materials, such as aluminum, steel, or other metals.

In some embodiments, the material of the guard member 30 includes at least one of inorganic salt, inorganic ceramic, elemental metal, elemental carbon, and organic colloid.

In some examples, the inorganic salt includes silicate. Optionally, the material of the guard member 30 includes mica.

In some examples, the inorganic ceramic includes at least one of aluminum oxide, silicon oxide, boron carbide, boron nitride, silicon carbide, silicon nitride, and zirconium oxide.

In some examples, the elemental metal material includes at least one of copper, iron, aluminum, tungsten, and titanium.

In some examples, the elemental carbon includes at least one of amorphous carbon and graphite.

In some examples, the organic colloid includes at least one of the following: an epoxy resin structural adhesive, an acrylate structural adhesive, a polyimide structural adhesive, a maleimide structural adhesive, a polyurethane structural adhesive, and an acrylic structural adhesive.

In some embodiments, the material of the guard member 30 includes at least two of inorganic salt, inorganic ceramic, elemental metal, elemental carbon, and organic colloid.

A composite structure formed of a plurality of materials is capable of improving the thermal shock resistance and thermal insulation properties of the guard member 30.

In some embodiments, the guard member 30 includes a carbon fiber plate formed of carbon fiber cloth and organic colloid.

In some embodiments, the guard member 30 includes a resin sheet formed of inorganic ceramic powder and organic colloid.

In some embodiments, the guard member 30 includes a graphite layer and a metal layer arranged by stacking.

In some embodiments, the guard member 30 includes a composite fiber sheet composed of carbon fiber and ceramic fiber.

In some embodiments, the guard member 30 includes a ceramic layer and a metal mesh connected to the ceramic layer.

In some embodiments, the melting point of the guard member 30 is greater than the melting point of the box body 20. The guard member 30 has better thermal shock resistance than the box body 20, thereby having a thermal protection function and reducing the risk of the box body 20 being broken.

In some embodiments, the melting point of the guard member 30 is greater than 1000°C. The guard member 30 has a high melting point and is not easily melted when subjected to thermal shock, so that the guard member 30 has better thermal shock resistance and reduces the risk of the guard member 30 being broken through.

In some embodiments, the melting point of the guard member 30 is greater than 1500°C.

In some embodiments, the battery cell 10 includes a shell 12, an electrode assembly 13, an electrolyte solution, and other functional components. The electrode assembly 13 and the electrolyte solution are accommodated in the shell 12 of the battery cell 10. The pressure relief mechanism 11 is arranged on the shell 12.

The shell 12 may be a hard shell, for example, the shell 12 may be made of aluminum alloy. The shell 12 may also be a soft shell, for example, the shell 12 may be made of aluminum plastic film.

In some embodiments, the battery cell 10 includes a first wall 12a, and the pressure relief mechanism 11 is arranged on the first wall 12a. The pressure relief mechanism 11 may be fixed to the first wall 12a by welding, bonding, or other means. Alternatively, the pressure relief mechanism 11 and the first wall 12a may be integrally formed.

The first wall 12a may be a shell wall of the case 12 facing the guard member 30 and having a certain thickness.

The first wall 12a of the battery cell 10 may be opposite to the bottom wall 20b of the box body 20, or may be opposite to the top wall 20a of the box body 20, or may be opposite to the side wall 20c of the box body 20.

In some embodiments, the thickness direction Z of the pressure relief mechanism 11 is parallel to the thickness direction of the first wall 12a.

In some embodiments, the first wall 12a is provided with a through hole, and the pressure relief mechanism 11 is accommodated in the through hole and seals the through hole. Optionally, the through hole is a stepped hole, and the pressure relief mechanism 11 is fixed on a stepped surface.

In some embodiments, an outer surface of the pressure relief mechanism 11 is recessed relative to an outer surface of the first wall 12a. In the embodiment of the present application, the pressure relief mechanism 11 may be hidden to reduce the risk of the pressure relief mechanism 11 being damaged by components outside the battery cell 10.

In some embodiments, the battery cell 10 includes an electrode terminal 14, and the electrode terminal 14 is mounted on the case 12 and is used for being electrically connected to the electrode assembly 13. The electrode terminal 14 is used for electrically connecting the electrode assembly 13 to the circuit outside the battery cell 10, so as to realize charging and discharging of the battery cell 10. For example, there may be a plurality of electrode terminals 14.

In some embodiments, the battery cell 10 includes a first wall 12a, a second wall 12b, and a third wall 12c, the pressure relief mechanism 11 is provided on the first wall 12a, the second wall 12b is located on a side of the first wall 12a away from the guard member 30, and the third wall 12c is connected to first wall 12a and second wall 12b. The battery cell 10 further includes an electrode terminal 14, and the electrode terminal 14 is arranged on at least one of the first wall 12a, the second wall 12b, and the third wall 12c.

There may be one or a plurality of third walls 12c. In some examples, the battery cell 10 is a cylindrical battery cell, and there is one cylindrical third wall 12c; in other embodiments, the battery cell 10 is a square battery cell, and there are a plurality of third walls 12c, the plurality of third walls 12c are arranged in the circumferential direction of the first wall 12a and form a square tube.

There may be a plurality of electrode terminals 14, and the plurality of electrode terminals 14 may include a positive electrode terminal and a negative electrode terminal. In some examples, the positive electrode terminal and the negative electrode terminal are arranged on the same wall of the battery cell 10, such as the first wall 12a, the second wall 12b, or the third wall 12c. In other examples, the positive electrode terminal and the negative electrode terminal are respectively arranged on two walls of the battery cell 10, for example, the positive electrode terminal and the negative electrode terminal are arranged on the first wall 12a and the second wall 12b respectively, the positive electrode terminal and the negative electrode terminal are arranged on the first wall 12a and the third wall 12c respectively, or the positive electrode terminal and the negative electrode terminal are arranged on the second wall 12b and the third wall 12c respectively.

Optionally, as shown in FIG. 3, both the positive electrode terminal and the negative electrode terminal are mounted on the first wall 12a.

In some embodiments, the guard member 30 is a flat plate structure. The flat plate structure is easy to form and easy to mount.

For example, the thickness of the guard member 30 is 0.5 mm to 5 mm.

The smaller the thickness of the guard member 30 is, the higher the risk of the guard member 30 being broken through by the high-temperature and high-speed substance is; the larger the thickness of the guard member 30 is, the lower the risk of the guard member 30 being broken through by the high-temperature and high-speed substance is, but the more space and weight of the guard member 30 is in the battery 2. The inventor limits the thickness of the guard member 30 to a range of 0.5 mm to 5 mm, so as to reduce redundancy in the size design of the guard member 30 while considering thermal protection requirements, reduce the loss of energy density of the battery 2, reduce the difficulty in molding of the guard member 30, and improve the safety performance of the battery 2.

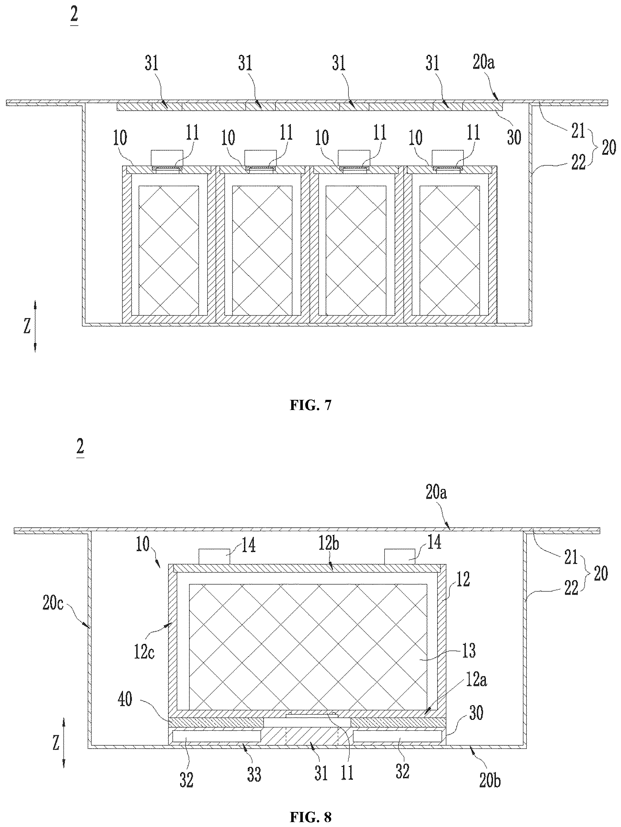

Fig. 7 is a schematic structural diagram of a battery according to some embodiments of the present application.

As shown in Fig. 7, in some embodiments, there are a plurality of battery cells 10.

Pressure relief mechanisms 11 of the plurality of battery cells 10 may face the same side. For example, the pressure relief mechanisms 11 of the plurality of battery cells 10 all face a top wall 20a of the box body 20. Alternatively, the pressure relief mechanisms 11 of the plurality of battery cells 10 may also face different sides. For example, the pressure relief mechanisms 11 of part of the battery cells 10 may face the top wall 20a of the box body 20, and the pressure relief mechanisms 11 of part of the battery cells 10 may face a bottom wall of the box body 20.

There may be one or a plurality of guard members 30.

In some examples, there is one guard member 30, the guard member 30 includes a plurality of protective regions 31, and the plurality of protective regions 31 are in one-to-one correspondence with the pressure relief mechanisms 11 of the plurality of battery cells 10. The guard member 30 is capable of covering the pressure relief mechanisms 11 of the plurality of battery cells 10 at the same time.

In other examples, the quantity of the guard members 30 is the same as that of the battery cells 10, each guard member 30 includes a protective region 31, and the protective regions 31 of the plurality of guard members 30 are in one-to-one correspondence with the pressure relief mechanisms 11 of the plurality of battery cells 10. Each guard member 30 only covers the pressure relief mechanism 11 of one battery cell 10.

In yet other examples, there are a plurality of guard members 30, and each guard member 30 includes at least two protective regions 31. Each of the guard members 30 is capable of covering the pressure relief mechanisms 11 of at least two battery cells 10.

In still other examples, there are a plurality of guard members 30, part of the guard members 30 each include only one protective region 31, and the remaining part of the guard members 30 each include at least two protective regions 31. Some guard members 30 only each cover the pressure relief mechanism 11 of one battery cell 10, and some guard members 30 are each capable of covering the pressure relief mechanisms 11 of at least two battery cells 10.

In some embodiments, there are a plurality of battery cells 10, and the guard member 30 is located on the same side of pressure relief mechanisms 11 of the plurality of battery cells 10. The guard member 30 includes a plurality of protective regions 31, and the plurality of protective regions 31 are in one-to-one correspondence with the pressure relief mechanisms 11 of the plurality of battery cells 10.

The guard member 30 is capable of covering the pressure relief mechanisms 11 of the plurality of battery cells 10. No matter which battery cell 10 experiences thermal runaway, the guard member 30 is capable of blocking the high-temperature and high-speed substance and reducing safety risks.

Fig. 8 is a schematic structural diagram of a battery according to some other embodiments of the present application.

As shown in Fig. 8, a flow channel 32 for a heat exchange medium to flow is arranged inside the guard member 30.

The heat exchange medium may be a liquid or a gas. Alternatively, the heat exchange medium may be water, a mixture of water and ethylene glycol, air, or the like.

When the heat exchange medium flows through the flow channel 32, it may exchange heat with the battery cell 10 through the guard member 30, thereby adjusting the temperature of the battery cell 10, so that the battery cell 10 operates within a suitable temperature range. Of course, the heat exchange medium may also exchange heat with other components of the battery 2 through the guard member 30.

The guard member 30 in the embodiment of the present application can achieve both a protective function and a thermal management function, which helps simplify the structure of the battery 2 and improve the energy density of the battery 2.

In some embodiments, when the substance discharged from the battery cell 10 acts on a wall of the flow channel 32, the wall of the flow channel 32 melts to form an opening, and the heat exchange medium in the flow channel 32 may pass through the opening and the pressure relief channel of the pressure relief mechanism 11 to be injected into the interior of the battery cell 10, thereby cooling the battery cell 10, slowing down the reaction inside the battery cell 10, and reducing safety risks.

In some embodiments, the guard member 30 further includes a heat exchange region 33, the battery cell 10 further includes a first wall 12a, and the pressure relief mechanism 11 is arranged on the first wall 12a. The heat exchange region 33 is used for connecting the first wall 12a to exchange heat with the first wall 12a.

The flow channel 32 may be arranged in the heat exchange region 33.

The heat exchange region 33 may be directly connected to the first wall 12a, or indirectly connected to the first wall 12a through another thermally conductive structure.

The heat exchange region 33 exchanges heat with the first wall 12a to adjust the temperature of the battery cell 10, so that the battery cell 10 works within a suitable temperature range, thereby improving the cycle performance of the battery cells 10.

In some embodiments, the battery 2 further includes a thermally conductive structure 40, at least a portion of the thermally conductive structure 40 being located between the first wall 12a and the heat exchange region 33 and connecting the first wall 12a and the heat exchange region 33.

The thermally conductive structure 40 may connect the first wall 12a and the heat exchange region 33 to enable stable heat exchange between the first wall 12a and the heat exchange region 33. The thermally conductive structure 40 may also support the guard member 30 such that the guard member 30 is arranged at an interval from the pressure relief mechanism 11.

In some embodiments, the thermally conductive structure 40 includes thermally conductive adhesive. The thermally conductive adhesive bonds the first wall 12a and the heat exchange region 33.

In some embodiments, the first wall 12a faces the bottom wall 20b of the box body 20, and the guard member 30 is located on the lower side of the first wall 12a. The electrode terminal 14 is arranged on the second wall 12b.

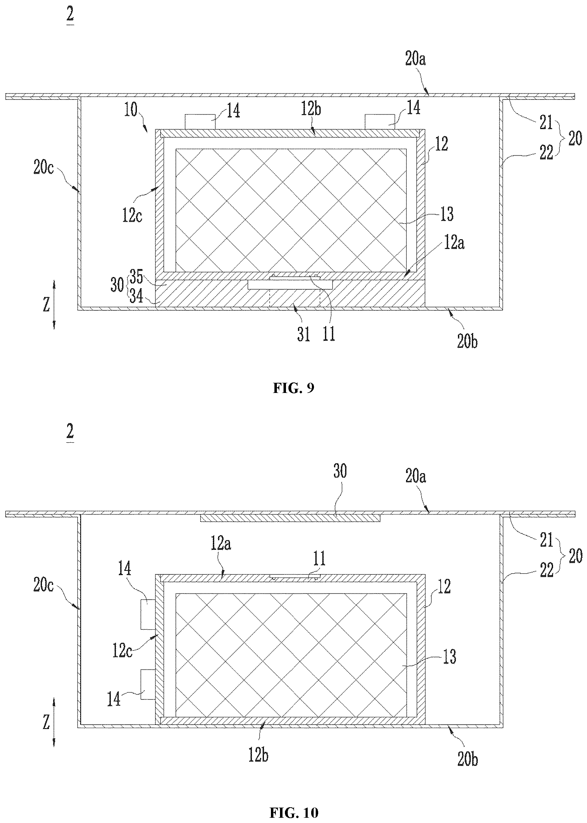

Fig. 9 is a schematic structural diagram of a battery according to some other embodiments of the present application.

As shown in Fig. 9, in some embodiments, the battery cell 10 further includes a first wall 12a, and a pressure relief mechanism 11 is arranged on the first wall 12a. The guard member 30 includes a main body part 34 and a supporting portion 35. The main body part 34 is arranged at an interval from the first wall 12a in the thickness direction Z. The supporting portion 35 is located between the first wall 12a and the main body part 34 and is used for connecting the first wall 12a and the main body part 34. The main body part 34 includes a protective region 31.

There may be one or a plurality of supporting portions 35.

The supporting portion 35 and the main body part 34 may be an integral structure. Alternatively, the supporting portion 35 and the main body part 34 may also be two independently formed components, and the two may be connected into one through bonding, abutment, welding, or other methods.

The supporting portion 35 is not only capable of fixing the main body part 34 to the battery cell 10, but also capable of separating the protective region 31 from the pressure relief mechanism 11. By adjusting the size of the supporting portion 35, the minimum distance L between the pressure relief mechanism 11 and the protective region 31 can be adjusted.

In some embodiments, the guard member 30 is located on the lower side of the battery cell 10, and the guard member 30 provides a supporting function for the battery cell 10. For example, the supporting portion 35 may be attached to the lower side of the battery cell 10 to fix the battery cell 10 on the upper side of the guard member 30.

Fig. 10 is a schematic structural diagram of a battery according to some other embodiments of the present application.

As shown in Fig. 10, in some embodiments, the first wall 12a of the battery cell 10 faces the top wall 20a of the box body 20, and the second wall 12b faces the bottom wall 20b of the box body 20. The electrode terminal 14 is mounted on the third wall 12c.

According to some embodiments of the present application, the present application further provides an electrical apparatus including the battery of any one of the above embodiments, the battery being used for providing electric energy to the electrical apparatus. The electrical apparatus may be any of the aforementioned devices or systems in which the battery is applied.

According to some embodiments of the present application, referring to Fig. 3 to Fig. 6, the present application provides a battery 2, which includes a battery cell 10, a box body 20, and a guard member 30, and the battery cell 10 and the guard member 30 are accommodated in the box body 20.

The battery cell 10 includes a first wall 12a and a pressure relief mechanism 11 arranged on the first wall 12a. The first wall 12a faces a top wall 20a of the box body 20. The guard member 30 is a flat plate structure and is fixed to the top wall 20a of the box body 20, the guard member 30 includes a protective region 31 opposite to the pressure relief mechanism 11 in a thickness direction Z of the pressure relief mechanism 11, and the protective region 31 is used for blocking at least part of substances released by the battery cell 10 through the pressure relief mechanism 11.

The weight energy density of the battery cell 10 is E; in the thickness direction Z, the minimum distance between the pressure relief mechanism 11 and the protective region 31 is L. E and L meet: $2\,\mathrm{Wh/(kg \cdot mm)} \leq E/L \leq 7010\,\mathrm{Wh/(kg \cdot mm)}$.

The present application is further illustrated below with reference to the embodiments.

In order to make the invention purpose, technical solution, and beneficial technical effect of the present application clearer, the present application may be further described in detail below with reference to embodiments. It should be understood that the embodiments in the present application are only for explaining the present application rather than limiting the present application, and the embodiments of the present application are not limited to the embodiments provided in the specification. If the specific experimental conditions or operating conditions are not specified in the embodiments, they are made according to conventional conditions, or made according to conditions recommended by a material supplier.

Embodiment 1:

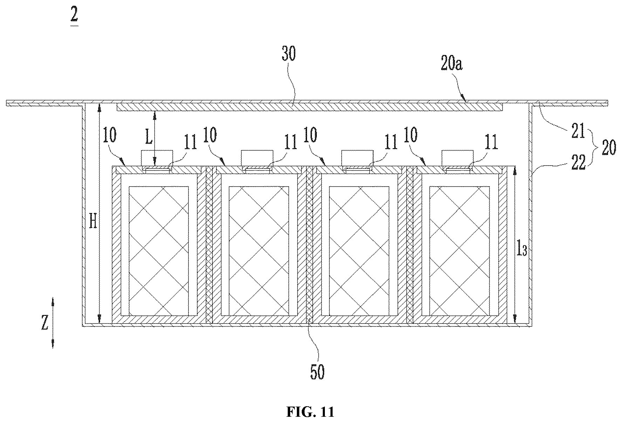

(i) Referring to Fig. 6 and Fig. 11, four square battery cells 10 are prepared. The length $l_1$ of the battery cell 10 is 220 mm, the width $l_2$ is 44 mm, and the height $l_3$ is 100 mm. In the thickness direction Z of the pressure relief mechanism 11, the outer surface of the pressure relief mechanism 11 is flush with the outer surface of the first wall 12a.

(ii) The weight energy density E of the battery cell 10 is measured to be 100 Wh/kg.

(iii) The four battery cells 10 are arranged in sequence in the width direction (that is, the direction of the dimension $l_2$), and a thermal insulation pad 50 with a thickness of 5 mm is arranged between adjacent battery cells 10. The thermal insulation pad 50 is adhered to the battery cell 10.

(iv) The four battery cells 10 are placed into the sealed box body 20, and the guard member 30 is attached to the wall of the box body 20 above the battery cell 10 (hereinafter referred to as the top wall 20a of the box body 20), and the guard member 30 is a flat plate, its thickness is 4 mm, and its material is a composite plate composed of boron nitride and carbon fiber. The dimension H of the accommodating cavity of the box body 20 in the height direction (that is, the direction in which the dimension $l_3$ is located, the direction being parallel to the thickness direction of the pressure relief mechanism 11) is 104.2 mm. After measurement and calculation, in the height direction, the minimum distance L between the guard member 30 and the pressure relief mechanism 11 is 0.2 mm. The space utilization T of the battery cell 10 in the height direction is calculated, and $T=l_3/H$.

(v) The thermal runaway of one battery cell 10 in the middle of the box body 20 is triggered to cause the battery cell 10 to release substance outward. For example, the battery cell 10 may be punctured or heated to cause thermal runaway of the battery cell 10. It is kept for 1 hour to observe whether the other three battery cells 10 have thermal runaway, and the quantity M of thermally runaway battery cells 10 among the three battery cells 10 is recorded.

Embodiments 2 to 16: For the test method of Embodiments 2 to 16, reference may be made to Embodiment 1. Differences between Embodiments 2 to 16 and Embodiment 1 are as shown in Table 1. For example, the weight energy density E of the battery cell may be adjusted by changing the chemical system of the battery cell. The minimum distance L between the guard member and the pressure relief mechanism may be changed by changing the dimension H of the box body.

Comparative Embodiments 1 to 4: For the test method of Comparative Embodiments 1 to 4, reference may be made to Embodiment 1. Differences between Comparative Embodiments 1 to 4 and Embodiment 1 are as shown in Table 1.

Table 1

|  | E (Wh/kg) | L (mm) | E/L · (Wh/(kg mm)) | H (mm) | T | The quantity M of thermally runaway batteries |
|---|---|---|---|---|---|---|
| Embodiment 1 | 100 | 0.2 | 500 | 104.2 | 96.0% | 0 |
| Embodiment 2 | 100 | 0.5 | 200 | 104.5 | 96.0% | 0 |
| Embodiment 3 | 100 | 1 | 100 | 105 | 95.2% | 0 |
| Embodiment 4 | 100 | 5 | 20 | 109 | 91.7% | 0 |
| Embodiment 5 | 100 | 20 | 5 | 124 | 80.6% | 0 |
| Embodiment 6 | 100 | 50 | 2 | 154 | 64.9% | 0 |
| Embodiment 7 | 150 | 5 | 30 | 109 | 91.7% | 0 |
| Embodiment 8 | 200 | 7 | 28.6 | 111 | 90.1% | 0 |
| Embodiment 9 | 250 | 8 | 31.3 | 112 | 89.3% | 0 |
| Embodiment 10 | 300 | 10 | 30 | 114 | 87.7% | 0 |
| Embodiment 11 | 400 | 10 | 40 | 114 | 87.7% | 0 |
| Embodiment 12 | 400 | 5 | 20 | 109 | 91.7% | 0 |
| Embodiment 13 | 400 | 0.2 | 2000 | 104.2 | 96.0% | 0 |
| Embodiment 14 | 400 | 0.1 | 4000 | 104.1 | 96.1% | 0 |
| Embodiment 15 | 600 | 0.1 | 6000 | 104.1 | 96.1% | 0 |
| Embodiment 16 | 701 | 0.1 | 7010 | 104.1 | 96.1% | 0 |
| Comparative Embodiment 1 | 100 | 80 | 1.25 | 184 | 54.3% | 0 |
| Comparative Embodiment 2 | 100 | 100 | 1 | 204 | 49.0% | 0 |
| Comparative Embodiment 3 | 400 | 0.05 | 8000 | 104.05 | 96.1% | 3 |
| Comparative Embodiment 4 | 600 | 0.05 | 12000 | 104.05 | 96.1% | 3 |

Referring to Embodiments 1 to 16 and Comparative Embodiments 1 to 2, the embodiments of the present application limit the value of E/L to be greater than or equal to 2 Wh/(kg • mm), which may reduce the over-design of the distance between the pressure relief mechanism and the guard member, improve the utilization of the internal space of the battery, and reduce the waste of the energy density of the battery.

Referring to Embodiments 1 to 16 and Comparative Embodiments 3 to 4, the embodiments of the present application limit the value of E/L to be less than or equal to 7010 Wh/(kg • mm), so as to reduce the thermal impact on other battery cells when a certain battery cell is thermally runaway, reduce the risk of thermal runaway of other battery cells, and improve the safety performance.

It should be noted that, without conflict, embodiments in the present application and features in the embodiments may be combined together.

Finally, it should be noted that, the above embodiments are merely used for describing the technical solution of the present application, instead of limiting the present application; although the present application is described in detail with reference to the foregoing embodiments, persons of ordinary skill in the art should understand that they can still make modifications on the technical solution recorded in the above embodiments, or perform equivalent replacements on a part of technical features thereof; these modifications or replacements are not intended to make the essences of the corresponding technical solutions depart from the spirit and scope of the technical solutions of the embodiments of the present application.

**Claims**

1. A battery, comprising:

   a battery cell comprising a pressure relief mechanism; and
   a guard member comprising a protective region opposite to the pressure relief mechanism in a thickness direction of the pressure relief mechanism, the protective region being used for blocking at least part of substances released by the battery cell through the pressure relief mechanism;
   wherein a weight energy density of the battery cell is E; in the thickness direction, a minimum distance between the pressure relief mechanism and the protective region is L; and E and L meet:

   $$2 \text{ Wh/(kg • mm)} \leq E/L \leq 7010 \text{ Wh/(kg • mm)}.$$

2. The battery according to claim 1, wherein E and L meet:

   $$10 \text{ Wh/(kg • mm)} \leq E/L \leq 800 \text{ Wh/(kg • mm)}.$$

3. The battery according to claim 1 or 2, wherein a value of E is 100 Wh/kg to 3505 Wh/kg.

4. The battery according to claim 3, wherein the value of E is 100 Wh/kg to 400 Wh/kg.

5. The battery according to any one of claims 1 to 4, wherein a value of L is 0.5 mm to 50 mm.

6. The battery according to claim 5, wherein the value of L is 0.5 mm to 10 mm.

7. The battery according to any one of claims 1 to 6, wherein a flow channel for a heat exchange medium to flow is arranged inside the guard member.

8. The battery according to claim 7, wherein the guard member further comprises a heat exchange region, the battery cell further comprises a first wall, and the pressure relief mechanism is arranged on the first wall; and
   the heat exchange region is used for connecting the first wall to exchange heat with the first wall.

9. The battery according to claim 8, further comprising a thermally conductive structure, wherein the thermally conductive structure is at least partially located between the first wall and the heat exchange region and connects the first wall and the heat exchange region.

10. The battery according to any one of claims 1 to 6, wherein

the battery cell further comprises a first wall, and the pressure relief mechanism is arranged on the first wall; the guard member comprises a main body part and a supporting portion, the main body part is arranged at an interval from the first wall in the thickness direction, and the supporting portion is located between the first wall and the main body part and is used for connecting the first wall and the main body part; and the main body part comprises the protective region.

11. The battery according to any one of claims 1 to 6, wherein the guard member is a flat plate structure.

12. The battery according to any one of claims 1 to 11, wherein there are a plurality of battery cells, and the guard member is located on the same side of the pressure relief mechanisms of the plurality of battery cells; and the guard member comprises a plurality of protective regions, and the plurality of protective regions are in one-to-one correspondence with the pressure relief mechanisms of the plurality of battery cells.

13. The battery according to any one of claims 1 to 12, further comprising a box body, wherein the battery cell and the guard member are accommodated in the box body; and the guard member is fixed on a surface of the box body facing the pressure relief mechanism.

14. The battery according to any one of claims 1 to 13, wherein the battery cell comprises a first wall, a second wall, and a third wall, the pressure relief mechanism is arranged on the first wall, the second wall is located on a side of the first wall away from the guard member, and the third wall connects the first wall and the second wall; and the battery cell further comprises an electrode terminal, and the electrode terminal is arranged on at least one of the first wall, the second wall, and the third wall.

15. The battery according to any one of claims 1 to 14, wherein the material of the guard member comprises at least one of inorganic salt, inorganic ceramic, elemental metal, elemental carbon, and organic colloid.

16. An electrical apparatus, comprising the battery according to any one of claims 1 to 15, wherein the battery is used for providing electric energy.

1

**FIG. 1**

2

**FIG. 2**

**FIG. 3**

**FIG. 4**

**FIG. 5**

**FIG. 6**

2

**FIG. 7**

2

**FIG. 8**

**FIG. 9**

**FIG. 10**

**FIG. 11**

## INTERNATIONAL SEARCH REPORT

| | International application No. |
|---|---|
| | **PCT/CN2022/107089** |

| | |
|---|---|
| **A.** | **CLASSIFICATION OF SUBJECT MATTER** |
| | H01M 50/24(2021.01)i |

According to International Patent Classification (IPC) or to both national classification and IPC

| | |
|---|---|
| **B.** | **FIELDS SEARCHED** |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 电池, 防热, 防护, 保护, 冲击, 阻挡, 防火, 喷, 泄, 排, 阀, battery, heat, protect+, impact +, barrier+, fire, spray+, exhaust+, vent, valve

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | CN 216980797 U (BYD CO., LTD.) 15 July 2022 (2022-07-15)<br>description, paragraphs 44-89, and figures 1-4 | 1-16 |
| Y | CN 216054969 U (JIANGSU POSITIVE FORCE NEW ENERGY BATTERY TECHNOLOGY CO., LTD.) 15 March 2022 (2022-03-15)<br>description, paragraphs 35-55, and figures 1-6 | 1-16 |
| Y | CN 216980795 U (BYD CO., LTD.) 15 July 2022 (2022-07-15)<br>description, paragraphs 3-104, and figures 1-7 | 1-16 |
| Y | CN 112332013 A (NINGDE CONTEMPORARY AMPEREX TECHNOLOGY CO., LTD.) 05 February 2021 (2021-02-05)<br>description, paragraphs 57-144, and figures 1-5 | 1-16 |
| Y | CN 213026308 U (NINGDE CONTEMPORARY AMPEREX TECHNOLOGY CO., LTD.) 20 April 2021 (2021-04-20)<br>description, paragraphs 83-192, and figures 1-18 | 1-16 |
| Y | CN 215955428 U (JIANGSU POSITIVE FORCE NEW ENERGY BATTERY TECHNOLOGY CO., LTD.) 04 March 2022 (2022-03-04)<br>description, paragraphs 6-155, and figures 1-16 | 1-16 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 December 2022** | **16 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/107089** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 214428739 U (JIANGSU TAFEIER POWER SYSTEM CO., LTD. et al.) 19 October 2021 (2021-10-19)<br>description, paragraphs 4-66, and figures 1-10 | 1-16 |

Form PCT/ISA/210 (second sheet) (January 2015)

**INTERNATIONAL SEARCH REPORT**
Information on patent family members

International application No.

**PCT/CN2022/107089**

| Patent document cited in search report | | | Publication date (day/month/year) | Patent family member(s) | | | Publication date (day/month/year) |
|---|---|---|---|---|---|---|---|
| CN | 216980797 | U | 15 July 2022 | None | | | |
| CN | 216054969 | U | 15 March 2022 | None | | | |
| CN | 216980795 | U | 15 July 2022 | None | | | |
| CN | 112332013 | A | 05 February 2021 | WO | 2021057283 | A1 | 01 April 2021 |
| | | | | CN | 112332013 | B | 01 October 2021 |
| | | | | EP | 3913730 | A1 | 24 November 2021 |
| | | | | IN | 202117057364 | A | 17 December 2021 |
| | | | | US | 2022093995 | A1 | 24 March 2022 |
| | | | | JP | 2022522495 | W | 19 April 2022 |
| | | | | EP | 3913730 | A4 | 18 May 2022 |
| | | | | US | 11342611 | B2 | 24 May 2022 |
| CN | 213026308 | U | 20 April 2021 | CA | 3156575 | A1 | 13 January 2022 |
| | | | | US | 2022013853 | A1 | 13 January 2022 |
| | | | | WO | 2022006892 | A1 | 13 January 2022 |
| | | | | KR | 20220016502 | A | 09 February 2022 |
| | | | | EP | 3958378 | A1 | 23 February 2022 |
| | | | | EP | 3958378 | A4 | 23 February 2022 |
| | | | | CN | 114175364 | A | 11 March 2022 |
| | | | | IN | 202117061391 | A | 24 June 2022 |
| CN | 215955428 | U | 04 March 2022 | None | | | |
| CN | 214428739 | U | 19 October 2021 | WO | 2022142069 | A1 | 07 July 2022 |

Form PCT/ISA/210 (patent family annex) (January 2015)